# EUROPEAN PATENT APPLICATION

(11) **EP 4 779 574 A1**
(43) Date of publication of application: **22.07.2026**
(21) Application number: 24934897.0
(22) Date of filing: 16.12.2024
(51) Int. Cl.: G06T 17/00, G06T 19/00

(54) **METHOD AND APPARATUS FOR DRAWING THREE-DIMENSIONAL SCENE, DEVICE, AND MEDIUM**

(30) Priority: 11.04.2024 CN 202410437956
(71) Applicant: Beijing Zitiao Network Technology Co., Ltd., Beijing 100190 (CN)
(72) Inventor: YANG, Liu, Beijing 100028 (CN); XU, Yongkang, Beijing 100028 (CN); LI, Jinxing, Beijing 100028 (CN); TANG, Xiaoyu, Beijing 100028 (CN)
(74) Representative: Marks & Clerk LLP
(86) International application number: PCT/CN2024/139755
(87) International publication number: WO 2025/213834

(57) **Abstract**

According to embodiments of the disclosure, a method, an apparatus, a device, and a storage medium for rendering a three-dimensional scene are provided. The method includes: obtaining image data corresponding to a target two-dimensional image based on a received data stream; reconstructing a plurality of two-dimensional images using the image data based on stitching information associated with the image data, the stitching information indicating positions of the plurality of two-dimensional images in the target two-dimensional image; and rendering the plurality of two-dimensional images in a three-dimensional scene based on display information corresponding to the plurality of two-dimensional images, the display information indicating display positions of the plurality of two-dimensional images in the three-dimensional scene. As such, the embodiments of the disclosure can use the two-dimensional images as a carrier to render pictures in the three-dimensional scene, thereby improving the rendering efficiency of the three-dimensional scene.

## Description

The present application claims priority to Chinese Patent Application No. 202410437956.1, filed on April 11, 2024 and entitled "METHOD, APPARATUS, DEVICE, AND STORAGE MEDIUM FOR RENDERING THREE-DIMENSIONAL SCENE", the entire content of which is incorporated by reference.

### TECHNICAL FIELD

Example embodiments of the present disclosure generally relate to the field of computers, and in particular, to a method, an apparatus, a device, and a computer-readable storage medium for rendering a three-dimensional scene.

### BACKGROUND

Extended reality (abbreviated as XR) has been widely studied and applied. By combining hardware devices with various technical means, XR fuses virtual content and real scenes to provide users with unique sensory experience. XR includes, for example, virtual reality (abbreviated as VR), augmented reality (abbreviated as AR), and mixed reality (abbreviated as MR). VR uses computers to simulate a virtual world in three-dimensional space to provide users with immersive experience in terms of vision, hearing, touch, and the like AR allows real environments and virtual objects to be superimposed and coexist in the same space in real-time. MR is a new visual environment that fuses the real world and the virtual world, where objects in a physically real-world scene coexist with objects in the virtual world in real-time.

Therefore, a virtual environment may be used to provide users with immersive interaction experience.

### SUMMARY

According to a first aspect of the present disclosure, a method for rendering a three-dimensional scene is provided. The method includes: obtaining, based on a received data stream, image data corresponding to a target two-dimensional image; reconstructing, using the image data and based on stitching information associated with the image data, a plurality of two-dimensional images, the stitching information indicating positions of the plurality of two-dimensional images in the target two-dimensional image; and rendering, based on display information corresponding to the plurality of two-dimensional images, the plurality of two-dimensional images in the three-dimensional scene, the display information indicating display positions of the plurality of two-dimensional images in the three-dimensional scene.

According to a second aspect of the present disclosure, an apparatus for rendering a three-dimensional scene is provided. The apparatus includes: an obtaining module configured to obtain, based on a received data stream, image data corresponding to a target two-dimensional image; a reconstruction module configured to reconstruct, using the image data and based on stitching information associated with the image data, a plurality of two-dimensional images, the stitching information indicating positions of the plurality of two-dimensional images in the target two-dimensional image; and a rendering module configured to render, based on display information corresponding to the plurality of two-dimensional images, the plurality of two-dimensional images in the three-dimensional scene, the display information indicating display positions of the plurality of two-dimensional images in the three-dimensional scene.

According to a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

According to a fourth aspect of the present disclosure, a computer-readable storage medium is provided. The computer-readable storage medium stores a computer program executable by a processor to implement the method of the first aspect.

It should be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in conjunction with the accompanying drawings and with reference to the following detailed description. In the drawings, the same or similar reference numbers refer to the same or similar elements, where:
FIG. 1 illustrates a schematic diagram of an example environment in which the embodiments of the present disclosure can be implemented;
FIGS. 2A-2D illustrate schematic diagrams of examples of virtual environments according to some embodiments of the present disclosure, respectively;
FIG. 3 illustrates a flowchart of an example process for rendering a three-dimensional scene according to some embodiments of the present disclosure;
FIG. 4 illustrates a block diagram of an example apparatus for rendering a three-dimensional scene according to some embodiments of the present disclosure; and
FIG. 5 illustrates a block diagram of a device capable of implementing a plurality of embodiments of the present disclosure.

### DETAILED DESCRIPTION OF EMBODIMENTS

It may be understood that before the use of the technical solutions disclosed in embodiments of the present disclosure, a user shall be informed of types, ranges of use, use scenarios and the like of personal information involved in the present disclosure in an appropriate manner and the authorization of the user shall be obtained in accordance with relevant laws and regulations.

For example, in response to receiving an active request from a user, prompt information is sent to the user to clearly prompt the user that the requested operation will require access to and use of the user's personal information. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the form of sending prompt information to the user may be for example, a pop-up window, in which the prompt information may be presented in text. Furthermore, the pop-up window may also include a selection control for the user to choose whether to "agree" or "disagree" to provide the personal information to the electronic device.

**It** may be understood that the above process of notifying the user and obtaining the authorization of the user is only illustrative and does not constitute a limitation on the implementations of the present disclosure, and other manners that satisfy the relevant laws and regulations may also be applied in the implementations of the present disclosure.

**It** may be understood that the data involved in the technical solution (including but not limited to the data itself, acquisition or use of the data) shall comply with the requirements of corresponding laws, regulations, and related provisions.

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. Rather, these embodiments are provided for a thorough and complete understanding of the present disclosure. It should be understood that the drawings and embodiments of the present disclosure are only for illustrative purposes and are not intended to limit the scope of protection of the present disclosure.

**It** should be noted that the titles of any section/sub-section provided herein are not limiting. Various embodiments are described throughout this document, and any type of embodiment may be included under any section/sub-section. Furthermore, the embodiments described in any section/sub-section may be combined in any manner with any other embodiments described in the same section/sub-section and/or different section/subsection.

**In** the description of the embodiments of the present disclosure, the term "include/comprise" and similar terms should be understood to be open-ended, that is, "include/comprise but not limited to". The term "based on" should be understood as "based at least in part on". The term "one embodiment" or "the embodiment" should be understood as "at least one embodiment". The term "some embodiments" should be understood as "at least some embodiments". Other definitions, either explicit or implicit, may also be included below. The terms "first", "second", and the like may refer to different or same objects. Other definitions, either explicit or implicit, may also be included below.

With the development of XR technologies, live streaming technologies based on XR technologies have also developed rapidly. Generally speaking, XR live streaming includes panoramic live streaming and live streaming based on volumetric video. Panoramic live streaming relies on shooting with a panoramic camera and does not support position adjustment by an observer. For a volumetric video, it requires relatively complex encoding, transmission, and decoding processes such as array shooting and three-dimensional modeling and the like.

The embodiments of the present disclosure provide a solution for rendering a three-dimensional scene. According to various embodiments of the present disclosure, image data corresponding to a target two-dimensional image is obtained based on a received data stream; a plurality of two-dimensional images are reconstructed using the image data based on stitching information associated with the image data, the stitching information indicating positions of the plurality of two-dimensional images in a target two-dimensional image; and the plurality of two-dimensional images are rendered in the three-dimensional scene based on display information corresponding to the plurality of two-dimensional images, the display information indicating display positions of the plurality of two-dimensional images in the three-dimensional scene.

Therefore, the embodiments of the present disclosure can use a two-dimensional image as a carrier to render images in a three-dimensional scene, thereby improving the rendering efficiency of the three-dimensional scene.

### EXAMPLE ENVIRONMENT

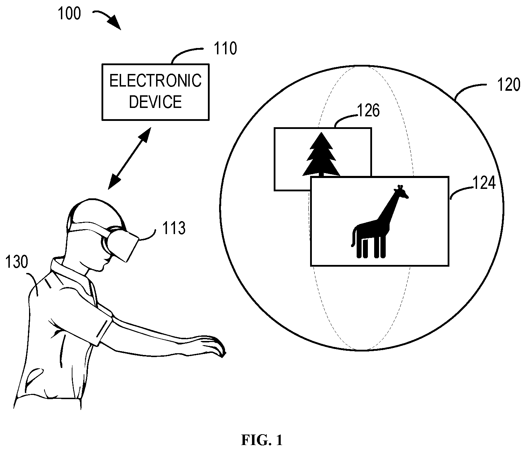

FIG. 1 illustrates a block diagram of an environment 100 according to some embodiments of the present disclosure. As shown in the drawings, the environment 100 may include a user 130, and the user 130 may wear, for example, an XR device 113. The XR device 113 may communicate with an electronic device 110 to reconstruct a virtual scene for the user 130 or to fuse virtual content (also referred to as a virtual environment) with a real environment (also referred to as a physical environment).

In the present disclosure, a virtual environment reconstructed based on VR technologies, and an environment in which virtual content and a real environment are fused based on AR or MR technologies are collectively referred to as a virtual environment 120. The XR device 113 may be a head-mounted or wearable near-eye display device, such as a head-mounted display, smart glasses, and the like, supporting VR, AR, MR and other technologies. The XR device 113 may include an image generation component and an optical display component for reconstructing the virtual environment 120 in a monocular or binocular field of view and displaying virtual components and/or virtual avatars in the virtual environment.

For example, the XR device 113 may display, in the virtual environment 120, one or more images, such as an image 124 and an image 126. As will be described in detail below, such an image 124 or image 126 may be rendered in a three-dimensional scene corresponding to the virtual environment 120 based on a received data stream.

The electronic device 110 may be a separate device capable of communicating with the XR device 113 and/or other image capturing devices, such as a server, a computing node for image or data processing, and the like, or may be integrated with the XR device 113 and/or other image capturing devices. In some embodiments, the electronic device 110 may be implemented as the XR device 113, that is, in this case, the XR device 113 may perform all the functions of the electronic device 110. It should be understood that the above description of the electronic device 110 is only illustrative and non-limiting, and the electronic device 110 may be implemented as a device in various forms, structures or categories, which is not limited in the embodiments of the present disclosure.

It should be understood that the structure and functions of the environment 100 are described for illustrative purposes only, without suggesting any limitation to the scope of the present disclosure.

### EXAMPLE INTERACTION PROCESS

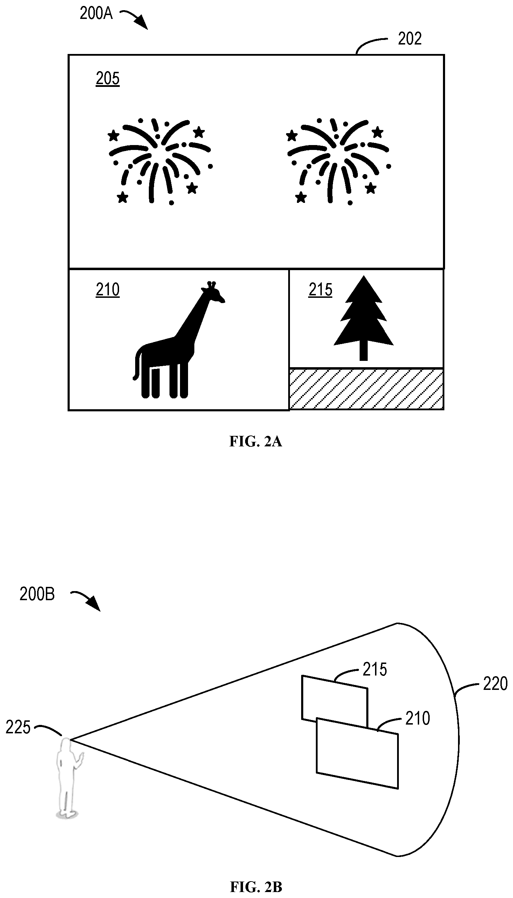

FIGS. 2A-2D illustrate schematic diagrams of rendering a three-dimensional scene according to some embodiments of the present disclosure, respectively. For the convenience of discussion, an example process according to some embodiments of the present disclosure will be described with reference to at least the environment 100 of FIG. 1.

In some embodiments, in order to efficiently render images in a virtual scene, the embodiments of the present disclosure may generate a separate data stream, such as a code stream, by stitching images.

As shown in FIG. 2A, an encoding device of the code stream may stitch a plurality of two-dimensional images (e.g., an image 205, an image 210, and an image 215) to form a single two-dimensional image 202. Furthermore, the encoding device may encode the two-dimensional image 202 to obtain corresponding image encoding data.

In some embodiments, the two-dimensional image 202 may be obtained by stitching two or more images. The present disclosure is not intended to limit a specific stitching manner of the images.

In some embodiments, one or more of the image 205, the image 210, and the image 215 may be associated with a video stream. For example, the image 205 may be a video frame in the video stream. In some embodiments, such a video stream may be, for example, a real-time video stream, such as a live video stream. Alternatively, such a video stream may also be a video stream corresponding to existing video content, such as a local video file.

Taking a live streaming scenario as an example, such a plurality of video streams may include, for example, video content uploaded by a streamer end and/or video content recorded in real-time by the streamer end.

In some embodiments, the encoding device may stitch corresponding video frames of the plurality of video streams according to temporal alignment to obtain the plurality of two-dimensional images.

Further, the encoding device may encode the plurality of two-dimensional images based on any appropriate method to obtain a corresponding data stream, such as a code stream.

In some embodiments, in order to facilitate the XR device 113 to extract a corresponding two-dimensional image from the image data , the encoding device may further determine and generate stitching information associated with the two-dimensional image 202. Such stitching information may indicate positions of the image 205, the image 210, and the image 215 in the two-dimensional image 205. For example, the stitching information may indicate the coordinates of four vertices of the image 205 in the two-dimensional image 202, or the coordinates of two corresponding vertices.

In some embodiments, in order to facilitate the XR device 113 to render a corresponding two-dimensional image in a three-dimensional scene, the encoding device may further determine and generate display information associated with the plurality of two-dimensional images. Such display information may indicate, for example, a display position of the image 205, the image 210, or the image 215 in the three-dimensional scene.

In some embodiments, the encoding device may send the stitching information and/or the display information to the XR device 113 independently of the data stream, for example. Alternatively, the encoding device may also encode the stitching information and/or the display information in the data stream, for example. As an example, the encoding device may encode the stitching information and/or the display information in supplemental enhancement information (SEI) of the code stream.

Accordingly, after receiving the data stream, the XR device 113 may decode from the data stream to obtain the image data corresponding to the two-dimensional image 202.

Further, the XR device 113 may reconstruct the plurality of images (e.g., the image 205, the image 210, and the image 215) in the two-dimensional image 202 based on the obtained stitching information.

For example, the XR device 113 may decode the stitching information in the SEI of the code stream to determine the positions of the image 205, the image 210, and the image 215 in the two-dimensional image 202, and may reconstruct the image 205, the image 210, and the image 215 accordingly.

Further, the XR device 113 may also render the plurality of reconstructed images (e.g., the image 205, the image 210, and the image 215) in the three-dimensional scene accordingly based on the obtained display information.

For example, the XR device 113 may decode the display information in the SEI of the code stream to determine the display positions of the image 205, the image 210, and the image 215 in the three-dimensional scene, and may render the image 205, the image 210, and the image 215 accordingly.

As shown in FIG. 2B, the XR device 113 may render the image 210 and the image 215 in corresponding planes in the three-dimensional scene. Such an image 210 or image 215 may also be referred to as a local image, for example.

In some embodiments, the image 205 may correspond to a panoramic image. Accordingly, the XR device 113 may determine that the image 205 corresponds to a panoramic image based on, for example, the SEI in the code stream, and may render the panoramic image as a background image of the three-dimensional scene.

Taking FIG. 2B as an example, the XR device 113 may render a corresponding portion of the image 205 as a picture background 220 of the viewed three-dimensional scene according to a virtual viewing position 225 (e.g., a position corresponding to a virtual camera of the three-dimensional scene).

Therefore, the embodiments of the present disclosure can use a two-dimensional image as a carrier to render images in a three-dimensional scene, thereby improving the rendering efficiency of the three-dimensional scene.

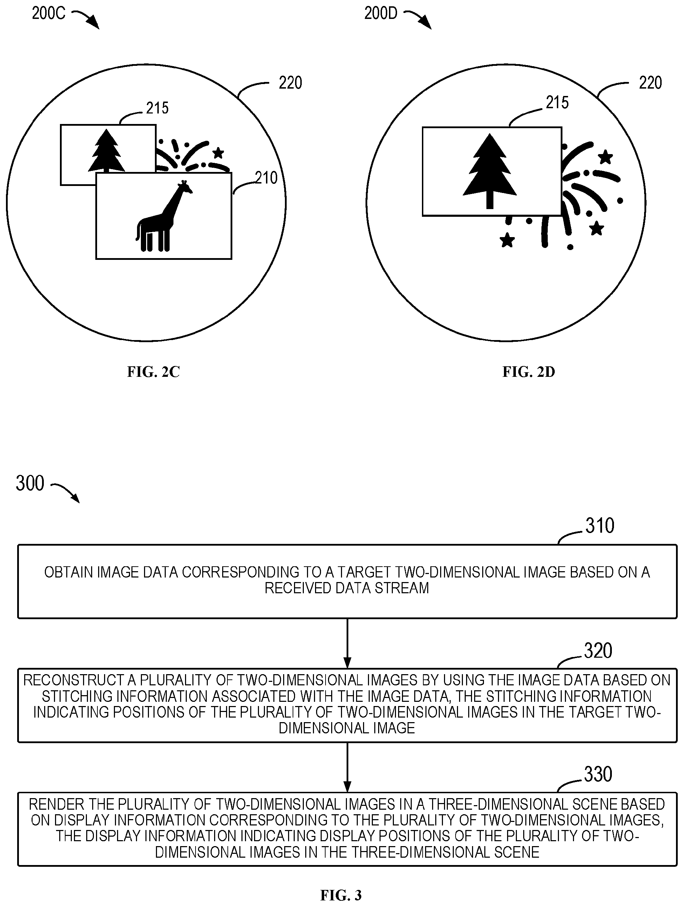

In some embodiments, the embodiments of the present disclosure may further support multi-degree-of-freedom interaction in the three-dimensional scene. For example, FIG. 2C illustrates a picture 200C of the three-dimensional scene seen by the user in a first state of the virtual camera.

As shown in FIG. 2C, the XR device 110 may determine to present the image 210, the image 215, and the background 220 according to parameters (e.g., position and posture information) of the virtual camera. As such, the XR device 110 may present a depth-of-field effect similar to that of a volumetric video, for example, the image 210 may partially occlude the image 215 based on the display position.

Further, as shown in FIG. 2C, the XR device 110 may also adjust the picture of the three-dimensional scene according to the motion of the virtual camera. As shown in FIG. 2D, when the virtual camera moves forward and crosses the display plane of the image 210 according to a user operation, the XR device 110 may present a picture 200D as shown in FIG. 2D.

As shown in FIG. 2D, the XR device 110 may determine to stop displaying the image 210 in the picture 200D based on a comparison between updated parameters of the virtual camera and the display position of the image 210. Additionally, the XR device 110 may also adjust the display size of the image 215 accordingly.

It should be understood that the XR device 110, for example, may also change the display direction of the image 210 or the image 215 accordingly according to a change in the posture of the virtual camera.

In this way, the embodiments of the present disclosure may support the interaction with multiple degrees of freedom in the rendered three-dimensional scene, thereby improving the interaction experience of users.

It should be understood that when the image 205, the image 210, or the image 215 corresponds to video frames of a video stream, the XR device 110 may render the corresponding video frame in the picture 200C or the picture 200D, thereby providing the user with a video viewing effect in the three-dimensional scene.

### EXAMPLE PROCESS

FIG. 3 illustrates an interaction process 300 in a virtual scene according to some embodiments of the present disclosure, which may be implemented by the XR device 113.

At block 310, the XR device 113 obtains image data corresponding to a target two-dimensional image based on a received data stream.

At block 320, the XR device 113 reconstructs a plurality of two-dimensional images using the image data based on stitching information associated with the image data, the stitching information indicating positions of the plurality of two-dimensional images in the target two-dimensional image.

At block 330, the XR device 113 renders the plurality of two-dimensional images in a three-dimensional scene based on display information corresponding to the plurality of two-dimensional images, the display information indicating display positions of the plurality of two-dimensional images in the three-dimensional scene.

In some embodiments, the process 300 further includes: decoding from the data stream to obtain the stitching information and/or the display information.

In some embodiments, the stitching information and/or the display information are encoded in supplemental enhancement information of the data stream.

In some embodiments, the plurality of two-dimensional images include a panoramic image, and rendering the plurality of two-dimensional images in the three-dimensional scene includes: rendering the panoramic image in the three-dimensional scene to serve as a background of the three-dimensional scene.

In some embodiments, the plurality of two-dimensional images include a local image, and rendering the plurality of two-dimensional images in the three-dimensional scene includes: rendering the local image in a corresponding plane of the three-dimensional scene based on the display information.

In some embodiments, the process 300 further includes: displaying a picture of the three-dimensional scene by using a target device, the picture being determined based on a virtual camera corresponding to the target device; and adjusting the picture based on a movement of the virtual camera.

In some embodiments, adjusting the picture based on the movement of the virtual camera includes: determining a display state of at least one two-dimensional image of the plurality of two-dimensional images based on a comparison between an updated parameter of the virtual camera and a display position of the at least one two-dimensional image.

In some embodiments, the display state indicates at least one of: whether the at least one two-dimensional image is displayed in the picture; a size of the at least one two-dimensional image in the picture; a direction of the at least one two-dimensional image in the picture.

In some embodiments, the target two-dimensional image is generated by stitching corresponding video frames of a plurality of video streams, and rendering the plurality of two-dimensional images in the three-dimensional scene includes: rendering a plurality of video pictures corresponding to the plurality of video streams in the three-dimensional scene.

In some embodiments, the plurality of video streams include: a video stream corresponding to existing video content; and/or a video stream captured in real time.

In some embodiments, the plurality of two-dimensional images include at least one two-dimensional image associated with live streaming content.

### EXAMPLE APPARATUS AND DEVICE

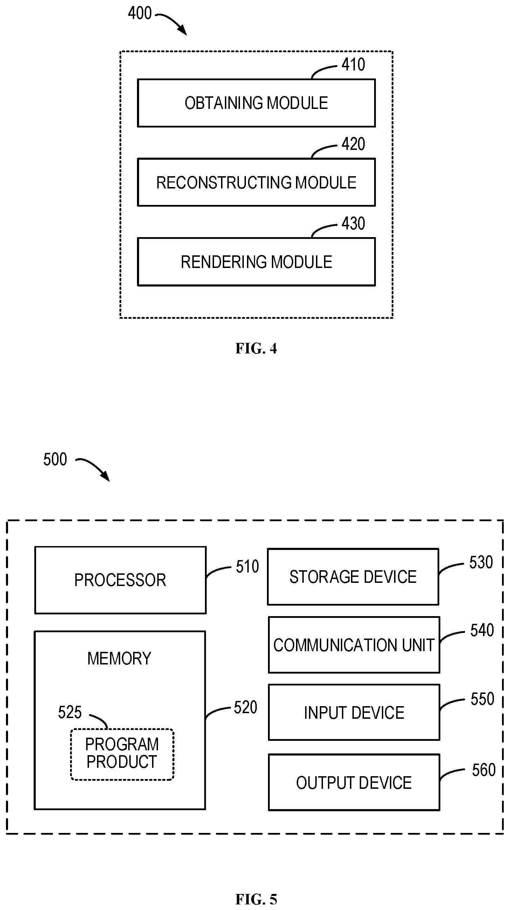

FIG. 4 illustrates a schematic structural block diagram of an apparatus 400 for interaction in a virtual scene according to some embodiments of the present disclosure. The apparatus 400 may be implemented as or included in the XR device 113. Each module/component in the apparatus 400 may be implemented by hardware, software, firmware, or any combination thereof.

As shown in the drawings, the apparatus 400 includes an obtaining module 410 configured to obtain image data corresponding to a target two-dimensional image based on a received data stream; a reconstruction module 420 configured to reconstruct a plurality of two-dimensional images by using the image data based on stitching information associated with the image data, the stitching information indicating positions of the plurality of two-dimensional images in the target two-dimensional image; and a rendering module 430 configured to render the plurality of two-dimensional images in a three-dimensional scene based on display information corresponding to the plurality of two-dimensional images, the display information indicating display positions of the plurality of two-dimensional images in the three-dimensional scene.

In some embodiments, the apparatus 400 further includes a decoding module configured to decode from the data stream to obtain the stitching information and/or the display information.

In some embodiments, the stitching information and/or the display information are encoded in supplemental enhancement information of the data stream.

In some embodiments, the plurality of two-dimensional images include a panoramic image, and the rendering module 430 is further configured to: render the panoramic image in the three-dimensional scene to serve as a background of the three-dimensional scene.

In some embodiments, the plurality of two-dimensional images include a local image, and the rendering module 430 is further configured to: render the local image in a corresponding plane of the three-dimensional scene based on the display information.

In some embodiments, the apparatus 400 further includes an adjustment module configured to: display a picture of the three-dimensional scene by using a target device, the picture being determined based on a virtual camera corresponding to the target device; and adjust the picture based on a movement of the virtual camera.

In some embodiments, the adjustment module is further configured to: determine a display state of at least one two-dimensional image of the plurality of two-dimensional images based on a comparison between an updated parameter of the virtual camera and a display position of the at least one two-dimensional image.

In some embodiments, the display state indicates at least one of: whether the at least one two-dimensional image is displayed in the picture; a size of the at least one two-dimensional image in the picture; or a direction of the at least one two-dimensional image in the picture.

In some embodiments, the target two-dimensional image is generated by stitching corresponding video frames of a plurality of video streams, and rendering the plurality of two-dimensional images in the three-dimensional scene includes:
rendering a plurality of video pictures corresponding to the plurality of video streams in the three-dimensional scene.

In some embodiments, the plurality of video streams include: a video stream corresponding to existing video content; and/or a video stream captured in real time.

In some embodiments, the plurality of two-dimensional images include at least one two-dimensional image associated with live streaming content.

FIG. 5 illustrates a block diagram of a computing device 500 in which one or more embodiments of the present disclosure may be implemented. It should be understood that the computing device 500 shown in FIG. 5 is only illustrative and should not constitute any limitation on the functions and scope of the embodiments described herein. The computing device 500 shown in FIG. 5 may be used to implement the XR device 113 of FIG. 1.

As shown in FIG. 5, the computing device 500 is in the form of a general-purpose computing device. Components of the computing device 500 may include but not limited to one or more processors or processing units 510, a memory 520, a storage device 530, one or more communication units 540, one or more input devices 550, and one or more output devices 550. The processing unit 510 may be a physical or virtual processor and may execute various processes according to programs stored in the memory 520. In a multi-processor system, a plurality of processing units execute computer executable instructions in parallel to improve the parallel processing capability of the computing device 500.

The computing device 500 typically includes a plurality of computer storage media. Such medium may be any available medium that is accessible to the computing device 500, including but not limited to volatile and non-volatile medium, removable and non-removable medium. The memory 520 may be volatile memory (e.g., a register, cache, a random access memory (RAM)), a non-volatile memory (e.g., a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the computing device 500.

The computing device 500 may further include additional removable/non-removable, volatile/non-volatile memory medium. Although not shown in FIG. 5, a disk driver for reading from or writing to a removable, non-volatile disk (e.g., a "floppy disk"), and an optical disk driver for reading from or writing to a removable, non-volatile optical disk may be provided. In these cases, each driver may be connected to a bus (not shown) by one or more data medium interfaces. The memory 520 may include a computer program product 525 having one or more program modules configured to perform various methods or acts of the various embodiments of the present disclosure.

The communication unit 540 enables communication with other computing devices through a communication medium. Additionally, the functions of the components of the computing device 500 may be implemented by a single computing cluster or multiple computing machines, which may communicate through communication connections. Therefore, the computing device 500 may use a logical connection with one or more other servers, a network personal computer (PC), or another network node to operate in a networked environment.

The input device 550 may be one or more input devices, such as a mouse, a keyboard, a tracking ball, and the like. The output device 550 may be one or more output devices, such as a display, a speaker, a printer, and the like. The computing device 500 may also communicate with one or more external devices (not shown) through the communication unit 540 as needed, the external devices such as a storage device, a display device, and the like, with one or more devices that enable a user to interact with the computing device 500, or with any devices (e.g., a network card, a modem, and the like) that enable the computing device 500 to communicate with one or more other computing devices. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product tangibly stored on a non-transitory computer-readable medium and including computer-executable instructions, the computer-executable instructions being executed by a processor to implement the method described above.

Various aspects of the present disclosure are described herein with reference to flowcharts and/or block diagrams of methods, apparatuses, devices and computer program products implemented according to the present disclosure. It should be understood that each block of the flowchart and/or block diagrams, and combinations of blocks in the flowchart and/or block diagrams, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing the functions/acts specified in one or more blocks of the flowchart and/or block diagrams. These computer-readable program instructions may also be stored in a computer-readable storage medium, these instructions cause the computer, programmable data processing apparatus, and/or other devices to work in a particular manner, so that the computer-readable medium having the instructions stored thereon includes an article of manufacture, which includes instructions for implementing various aspects of the functions/acts specified in one or more blocks of the flowchart and/or block diagrams.

The computer-readable program instructions may be loaded onto a computer, another programmable data processing apparatus, or other devices, so that a series of operations and steps are performed on the computer, the another programmable data processing apparatus or the other devices to generate a computer-implemented process, such that the instructions executed on the computer, the another programmable data processing apparatus, or the other devices implement the functions/acts specified in one or more blocks of the flowchart and/or block diagrams.

The flowchart and block diagrams in the accompany drawings show the possibly implemented architectures, functions and operations of the system, method and computer program product according to a plurality of implementations of the present disclosure. In this regard, each block in the flowchart or block diagrams may represent a module, a program segment, or portion of instructions, which includes one or more executable instructions for implementing the specified logical functions. In some alternative implementations, the functions indicated in the blocks may occur in an order different from that indicated in the drawings. For example, two consecutive blocks may actually be performed substantially in parallel, or they may sometimes be performed in the reverse order, depending on the functions involved. It should also be noted that each block of the block diagrams and/or flowcharts, and combinations of the blocks in the block diagrams and/or flowcharts, may be implemented by special purpose hardware-based systems that perform the specified functions or acts, or by combinations of special purpose hardware and computer instructions.

The implementations of the present disclosure have been described above, and the above description is illustrative, non-exhaustive, and not limited to the disclosed implementations. Many modifications and variations will be apparent to those of ordinary skill in the art without departing from the scope and spirit of the described implementations. The terminology used herein is chosen to best explain the principles of the implementations, the practical applications or improvements to the technology in the market, or to enable others of ordinary skill in the art to understand the implementations disclosed herein.

## Claims

1. A method for rendering a three-dimensional scene, comprising:
obtaining image data corresponding to a target two-dimensional image based on a received data stream;
reconstructing a plurality of two-dimensional images by using the image data based on stitching information associated with the image data, the stitching information indicating positions of the plurality of two-dimensional images in the target two-dimensional image; and
rendering the plurality of two-dimensional images in a three-dimensional scene based on display information corresponding to the plurality of two-dimensional images, the display information indicating display positions of the plurality of two-dimensional images in the three-dimensional scene.

2. The method of claim 1, further comprising:
decoding from the data stream to obtain the stitching information and/or the display information.

3. The method of claim 2, wherein the stitching information and/or the display information are encoded in supplementary enhancement information of the data stream.

4. The method of claim 1, wherein the plurality of two-dimensional images comprise a panoramic image, and rendering the plurality of two-dimensional images in the three-dimensional scene comprises:
rendering the panoramic image in the three-dimensional scene to serve as a background of the three-dimensional scene.

5. The method of claim 1, wherein the plurality of two-dimensional images comprise a local image, and rendering the plurality of two-dimensional images in the three-dimensional scene comprises:
rendering the local image in a corresponding plane of the three-dimensional scene based on the display information.

6. The method of claim 1, further comprising:
displaying a picture of the three-dimensional scene by using a target device, the picture being determined based on a virtual camera corresponding to the target device; and
adjusting the picture based on a movement of the virtual camera.

7. The method of claim 6, wherein adjusting the picture based on the movement of the virtual camera comprises:
determining a display state of at least one two-dimensional image of the plurality of two-dimensional images based on a comparison between an updated parameter of the virtual camera and a display position of the at least one two-dimensional image.

8. The method of claim 7, wherein the display state indicates at least one of:
whether the at least one two-dimensional image is displayed in the picture;
a size of the at least one two-dimensional image in the picture;
a direction of the at least one two-dimensional image in the picture.

9. The method of claim 1, wherein the target two-dimensional image is generated by stitching corresponding video frames of a plurality of video streams, and rendering the plurality of two-dimensional images in the three-dimensional scene comprises:
rendering a plurality of video pictures corresponding to the plurality of video streams in the three-dimensional scene.

10. The method of claim 9, wherein the plurality of video streams comprise:
a video stream corresponding to existing video content; and/or
a video stream captured in real time.

11. The method of claim 1, wherein the plurality of two-dimensional images comprise at least one two-dimensional image associated with live streaming content.

12. An apparatus for rendering a three-dimensional scene, comprising:
an obtaining module configured to obtain image data corresponding to a target two-dimensional image based on a received data stream;
a reconstructing module configured to reconstruct a plurality of two-dimensional images by using the image data based on stitching information associated with the image data, the stitching information indicating positions of the plurality of two-dimensional images in the target two-dimensional image; and
a rendering module configured to render the plurality of two-dimensional images in a three-dimensional scene based on display information corresponding to the plurality of two-dimensional images, the display information indicating display positions of the plurality of two-dimensional images in the three-dimensional scene.

13. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon, the computer program being executable by a processor to implement the method of any of claims 1 to 11.
